# EUROPÄISCHE PATENTSCHRIFT

(11) **EP 2 926 504 B1**
(45) Veröffentlichungstag und Bekanntmachung des Hinweises auf die Patenterteilung: **22.01.2020**
(21) Anmeldenummer: 13785420.4
(22) Anmeldetag: 29.10.2013
(51) Int. Cl.: H04L 12/40, G05B 19/418

(54) **VERFAHREN ZUM BETREIBEN EINES FELDBUSPROTOKOLL-FÄHIGEN FELDGERÄTES**
METHOD FOR OPERATING A FIELD DEVICE CAPABLE OF A FIELD BUS PROTOCOL
PROCÉDÉ D'EXPLOITATION D'UN APPAREIL DE TERRAIN ACCEPTANT UN PROTOCOLE DE BUS DE TERRAIN

(30) Priorität: 30.11.2012 DE 102012111665
(43) Veröffentlichungstag der Anmeldung: 07.10.2015
(73) Patentinhaber: Endress+Hauser Wetzer GmbH+Co. KG, 87484 Nesselwang (DE)
(72) Erfinder: SCHNEID, Christian, 87484 Nesselwang (DE); SCHNALKE, Michael, 87484 Nesselwang (DE)
(74) Vertreter: Andres, Angelika Maria
(86) Internationale Anmeldenummer: PCT/EP2013/072575
(87) Internationale Veröffentlichungsnummer: WO 2014/082808

(56) Entgegenhaltungen:
- Etschberger Konrad: "Controller-Area-Network Inhaltsverzeichnis: Controller-Area-Network -Grundlagen, Protokolle, Bausteine, Anwendungen" In: "Controller-Area-Network Inhaltsverzeichnis: Controller-Area-Network -Grundlagen, Protokolle, Bausteine, Anwendungen", 1. April 2002 (2002-04-01), Carl Hanser Verlag Münhen Wien, Holzkirchen Germany, XP055101586, ISBN: 978-3-44-621776-8 Seiten 216-259, Seite 216 - Seite 226 Seite 244 - Seite 246
- Samson: "Technical Information HART Communication Part 4 Communications", , 22. Mai 2012 (2012-05-22), Seiten 1-40, XP055101712, Internet Gefunden im Internet: URL:http://www.samson.de/pdf_en/l452en.pdf [gefunden am 2014-02-12]
- @bullet Tu-München ET AL: "6 Feldbusprotokolle 6.1 Signalübertragung", , 1 January 2003 (2003-01-01), pages 1-87, XP055598508, Retrieved from the Internet: URL:http://www.i6.in.tum.de/pub/Main/Teach ingWs2003Echtzeitsysteme/Feldbusprotokolle .pdf [retrieved on 2019-06-21]

## Beschreibung

Die Erfindung bezieht sich auf ein Verfahren zum Betreiben eines Feldbusprotokoll-fähigen Feldgerätes, ein Feldgerät zur Verwendung des Verfahrens, ein Bediengerät zur Verwendung in dem Verfahren sowie ein Computerprogrammprodukt zur Ausführung des Verfahrens.

In Anlagen der Prozessautomatisierungstechnik werden heutzutage oftmals Feldgeräte eingesetzt, welche die in der Anlage ablaufenden Prozesse steuern, regeln und/oder eine Messgröße erfassen. Solche Feldgeräte bestehen beispielsweise aus einem Messumformer, an dem wenigstens ein Messaufnehmer, welcher zur Aufnahme einer chemischen und/oder physikalischen Messgröße dient, angeschlossen ist. Ferner werden unter dem Begriff Feldgeräte auch Anzeige- und/oder Bedieneinheiten verstanden, die vor Ort in der Anlage verwendet werden oder installiert sind. Diese Feldgeräte werden heutzutage oftmals über einen Feldbus miteinander verbunden. Dadurch können die Feldgeräte miteinander und/oder mit einer Steuereinheit, die den Prozess steuert, Informationen wie beispielsweise Messwerte austauschen. Zur Datenübertragung über einen derartigen Feldbus sind aus dem Stand der Technik verschiedene Feldbusprotokolle bekannt geworden.

Ferner gibt es bspw. beim HART Protokoll gibt verschiedene Gruppen von Kommandos. Dabei wird zwischen universellen Kommandos, die auch als Basiskommandos bezeichnet werden und allgemeinen Kommandos, die auch als common-practice Kommandos bezeichnet werden unterschieden. Ferner sind beim HART Protokoll auch gerätespezifische Kommandos, so genannte device specific commands, bekannt geworden.

Ähnlich ist auch das Profibus Protokoll aufgebaut, dessen Kommandos beispielsweise in Basiskommandos und herstellerspezifische Kommandos unterteilt werden können. Bei der Zuweisung von herstellerspezifischen Kommandos zu Funktion eines Feldgerätes ist es aus dem Stand der Technik wie beispielsweise aus der WO2012041616A1 bekannt, darauf zu achten, dass das selbe Kommando eindeutig definiert ist und nicht beispielsweise bei unterschiedlichen an dem Feldbus angeschlossenen Feldgeräten unterschiedliche Funktionen auslöst.

Das Dokument TU-München ET AL: "6 Feldbusprotokolle 6.1 Signalübertragung", 1. Januar 2003 (2003-01-01), Seiten 1-87, XP055598508, Gefunden im Internet: URL:http:// www.i6.in.tum.de/pub/Main/TeachingWs2003 Echtzeitsysteme/Feldbusprotokolle.pdf beschreibt die Feldbusprotokolle zur Erleichterung des Einsatzes von Geräten verschiedener Lieferanten. Die verschiedenen Dienste werden vom Server beschrieben und können von ihm freigegeben werden.

Feldgeräte werden in der Regel über device description basierte, d. h. gerätebeschreibungsbasierte, Hostsysteme konfiguriert. Diese device description basierten Hostsysteme und Bediengeräte beziehungsweise Bedienprogramme geben einem Entwickler oder einer Bedienperson keine Kontrolle über den Zeitpunkt und die Reihenfolge in der Parameter beziehungsweise Parametersätze in das Feldgerät geschrieben werden. Denn je nach System werden Parameter in einer nicht zu beeinflussenden Reihenfolge in das Feldgerät geschrieben, wenn über eine Bedienoberfläche eine Änderung der Parametrierung durchgeführt wird. Dies kann in der Praxis zu Problemen führen, da Parameter nicht immer unabhängig voneinander geändert werden dürfen, denn oftmals bestehen Abhängigkeiten zwischen einzelnen Parameter eines Feldgerätes. Daher ist es bei einer Parameteränderung vorteilhaft, wenn alle von der Abhängigkeit betroffenen Parameter in einer bestimmten Reihenfolge an das Feldgerät übertragen und dort gespeichert werden, damit keine rekursiven Abhängigkeitsauflösungen erfolgen müssen. Vor allem in sicherheitskritischen Anwendungen ist eine bekannte Schreibreihenfolge von Parametern wichtig.

Eine weitere Anforderung stellt das Schreiben eines ganzen Parametersatzes (Download) in das Feldgerät dar. In diesem Fall werden die Abhängigkeiten zwischen den Parametern durch das Hostsystem, bei dem es sich bspw. um eine Steuereinheit, die über den Feldbus mit dem Feldgerät verbunden ist, aufgelöst. Somit kann die Performance des Feldgerätes deutlich gesteigert werden, wenn dem Feldgerät bekannt ist, dass ein Download stattfindet, denn es ist in diesem Fall nicht nötig, dass das Feldgerät selbst während des Downloads Abhängigkeiten zwischen den Parametern berechnet beziehungsweise auflöst.

Des Weiteren muss das Feldgerät in dem Fall eines Downloads nicht nach jedem Parameter, den es empfängt, eine Persistierung in einem nicht flüchtigen Speicher, der beispielsweise in das Feldgerät integriert sein kann, durchführen, sondern kann die Persistierung nach erfolgten Download, d. h. den vollständigen Download, einmal über alle gedownloadeten Parameter machen.

Das ist somit Aufgabe der vorliegenden Erfindung, das Speichern beziehungsweise Schreiben von Parametern in ein Feldgerät im Wesentlichen feldgeräteunabhängig, d. h. unabhängig von der vorliegenden Version des Feldgerätes und den zur Verfügung stehenden Kommandos des Feldbusprotokolls zu ermöglichen.

Die Aufgabe wird erfindungsgemäß durch ein Verfahren zum Betreiben eines feldbusprotokollfähigen Feldgeräts nach Anspruch 1 ein Feldgerät zur Verwendung in dem Verfahren nach Anspruch 10, ein Bediengerät zum Betreiben eines Feldbusprotokoll-fähigen Feldgeräts gemäß dem Verfahren nach Anspruch 11 und ein Computerprogrammprodukt nach Anspruch 12 gelöst.

Hinsichtlich des Verfahrens wird die Aufgabe durch ein Verfahren zum Betreiben eines Feldbusprotokoll-fähigen Feldgerätes gelöst, wobei das Feldbusprotokoll über wenigstens ein Kommando verfügt, welches Kommando in Abhängigkeit eines Werts einer Hilfsvariable zur Ausführung einer ersten Funktion beziehungsweise zur Ausführung einer zweiten Funktion des Feldgerätes dient, wobei sich die erste und die zweite Funktion voneinander unterscheiden. Bei dem Feldbusprotokoll handelt es sich bevorzugt um ein Protokoll zur digitalen Datenübertragung über einen Feldbus. Wie bereits erwähnt, sind derartige Protokolle bereits aus dem Stand der Technik bekannt, wie zum Beispiel das HART Protokoll und das Profibusprotokoll oder das Foundation Fieldbus Protokoll. Ein entsprechendes Feldbusprotokoll-fähiges Feldgerät weist eine entsprechende Schnittstelle auf, über die gemäß dem zur Kommunikation über die Schnittstelle verwendete Feldbusprotokoll Daten ausgetauscht werden können. Die entsprechenden genannten Feldbusprotokolle verfügen, wie eingangs beschrieben, über Kommandos unterschiedlicher Kategorie, wie beispielsweise Basiskommandos oder herstellerspezifische Kommandos. Vorzugsweise handelt es sich bei dem wenigstens einem Kommando in dessen Abhängigkeit eine erste beziehungsweise zweite Funktion des Feldgerätes ausgeführt wird um ein Basiskommando des entsprechenden Feldbusprotokolls. Diese Kommando beziehungsweise die erste oder zweite Funktion des Feldgerätes wird in Abhängigkeit einer Hilfsvariablen ausgeführt. Der Wert der Hilfsvariablen kann dabei in einer Speichereinheit des Feldgerätes hinterlegt sein. Nach Empfangen eines entsprechenden Kommandos wird der Wert der Hilfsvariablen überprüft und die erste beziehungsweise die zweite Funktion des Feldgerätes ausgeführt. Alternativ kann die Hilfsvariable auch in einem Feldbustelegramm, welches das wenigstens eine Kommandos enthält, mitübertragen werden.

Vorzugsweise wird von dem Feldgerät als Antwort auf das Kommando unabhängig von der Funktion, die in Abhängigkeit der Hilfsvariablen bspw. feldgeräteintern ausgeführt wird, das gleiche Antworttelegramm und/oder die gleiche Rückmeldung über den Feldbus übertragen. Unabhängig davon ob also die erste oder die zweite Funktion ausgeführt wird, wird bspw. dem Master der das Kommando an das Feldgerät abgesetzt hat, ein und dieselbe Antwort bspw. in Form eines Antworttelegramms oder einer Rückmeldung bspw. in Form eines sog. Acknowledge übertragen. Beim HART Protokoll wäre das der Returncode "0", der das erfolgreiche Schreiben ins Feldgerät bestätigt (unabhängig welches Schreibverfahren ausgeführt wurde oder ob überhaupt etwas geschrieben wurde (s.u.)).

In einer Ausführungsform des Verfahrens kann die Hilfsvariable wenigsten zwei Werte annehmen. Bei der Hilfsvariablen kann es sich also auch um ein Bool'sche Variable, die die Werte True oder False annehmen kann, handeln. Ferner kann es sich bei der Hilfsvariablen auch um eine anderweitige Variablen, wie beispielsweise einen, vorzugsweise ganzzahligen, numerischen Wert in dessen Abhängigkeit eine Funktion des Feldgerätes ausgeführt wird, handeln.

In einer weiteren Ausführungsform des Verfahrens wird der Wert der Hilfsvariablen durch eine Bedienperson bestimmt. Beispielsweise kann über ein Bedienelement oder eine anderweitige Nutzereingabe der Wert, der Hilfsvariablen geändert werden. Somit ist es in Abhängigkeit einer Nutzereingabe möglich, den Wert der Hilfsvariablen zu ändern. Der Wert der Hilfsvariablen kann beispielsweise Software- oder Hartwaremäßig eingestellt werden. Beispielsweise kann ein Schalter, der sich bspw. am Feldgerät befindet, zur Änderung des Werts der Hilfsvariablen verändert werden.

In einer weiteren Ausführungsform des Verfahrens handelt es sich bei dem Kommando um ein vorspezifiziertes Kommando oder ein herstellerspezifisches Kommando des Feldbusprotokolls, insbesondere um ein Lese- oder Schreibkommando. Bei dem Feldbusprotokoll handelt es sich bevorzugt um das HART Protokoll und bei dem vorspezifizierten Kommando um ein universelles Basiskommando beziehungsweise ein common-practice Kommando. Gemäß der Feldbusprotokollspezifikation darf ein Parameter nur durch genau ein Kommando referenziert werden. Je nach Anwendung kann es vorteilhaft oder erforderlich sein, das Kommando auf Plausibilität zu prüfen und/oder eine Persistierung des durch das Kommando referenzierten Parameters bzw. Parameterwerts an- bzw. auszuschalten. Durch die Verwendung einer Hilfsvariablen kann somit dem Kommando eine andere oder ergänzende Bedeutung zugewiesen werden.

In einer weiteren Ausführungsform des Verfahrens handelt es sich bei der ersten Funktion um die dem Kommando von dem Feldbusprotokoll vorgegebene Funktion bzw. vorgesehene Funktion. Wie in dem vorherigen Absatz beschrieben, handelt es sich bei dem Kommando besonders bevorzugt um ein Schreib- oder Lesekommando, durch das der Wert eines Parameters geschrieben oder gelesen wird. Bei der ersten Funktion des Feldgerätes, die in Abhängigkeit dieses Kommandos ausgeführt wird, handelt es sich somit um das Schreiben oder Lesen eines entsprechenden durch das Kommando referenzierten Parameters.

In einer weiteren Ausführungsform des Verfahrens besteht die zweite Funktion darin, die erste Funktion zu unterlassen. In Abhängigkeit der Hilfsvariablen kann er also, trotz Erhalt des Kommandos, die entsprechende zu dem Kommando zugehörige Funktion nicht ausgeführt, d.h. unterlassen, werden.

In einer weiteren Ausführungsform des Verfahrens erfolgt in Abhängigkeit des Werts der Hilfsvariablen die Speicherung von Daten vermittels des Feldgerätes in einen flüchtigen beziehungsweise nichtflüchtigen Speicher. Vorzugsweise handelt es sich bei dem Speicher um eine Speichereinheit, die in das Feldgerät integriert ist. Diese Speichereinheit ist beispielsweise Bestandteil der Betriebselektronik des Feldgerätes.

In einer weiteren Ausführungsform des Verfahrens stehen mehrere Speichereinheiten zur Speicherung von Daten mittels des Feldgerätes zur Verfügung, wobei in Abhängigkeit des Werts der Hilfsvariablen der Speicherort der Speicherung der Daten ausgewählt wird. Beispielsweise kann er sich bei den unterschiedlichen Speichereinheiten um flüchtige beziehungsweise nichtflüchtige Speichereinheiten handeln. Ferner kann zur Speicherung der Daten, vorzugsweise von Parametern, unterschiedliche Speicherverfahren verwendet werden.

In einer weiteren Ausführungsform des Verfahrens handelt es sich bei dem Kommando um ein Schreibkommando zum Schreiben eines Parameterwerts eines Parameters des Feldgerätes in eine Speichereinheit des Feldgerätes.

In einer weiteren Ausführungsform des Verfahrens wird das Kommando von einem Bediengerät oder einer Bedienanwendung an das Feldgerät übertragen. Beispielsweise kann das Kommando über den Feldbus von der Bedienanwendung beziehungsweise dem Bediengerät an das Feldgerät übertragen werden. Es ist auch möglich, dass das Kommando über eine Serviceschnittstelle des Feldgerätes von dem Bediengerät beziehungsweise der Bedienanwendung an das Feldgerät übertragen wird. In diesem Fall kann zur Kommunikation zwischen dem Bediengerät beziehungsweise der Bedienanwendung und dem Feldgerät ein entsprechendes Kommunikationsprotokoll verwendet werden. Bei diesem Protokoll kann es sich beispielsweise um ein herstellerspezifisches Protokoll handeln, das zur Kommunikation über eine Serviceschnittstelle des Feldgerätes dient.

In einer weiteren Ausführungsform des Verfahrens wird dieses Variable beziehungsweise ein Wert der Hilfsvariablen in ein Telegramm gemeinsam mit dem Kommando an das Feldgerät übertragen. Somit kann beispielsweise bei jedem neuen versenden des Kommandos an das Feldgerät eine andere Funktion des Feldgerätes ausgeführt werden. Ferner kann auch vorgesehen sein, dass die von dem Kommando gelöste Funktion des Feldgerätes sich nicht ändert bis ein neuer Wert der Hilfsvariablen festgelegt wird.

In einer weiteren Ausführungsform des Verfahrens wird der Hilfsvariablen ein erster Wert zugewiesen und ein erstes Kommando an das Feldgerät übertragen und eine erste, diesem Kommando entsprechende Funktion von dem Feldgerät ausgeführt, wobei der Hilfsvariablen anschließend ein zweiter Wert zugewiesen wird, der sich von dem ersten Wert unterscheidet und anschließend ein zweites Kommando an das Feldgerät übertragen und eine zweite Funktion von dem Feldgerät ausgeführt wird, wobei sich die zweite Funktion von der ersten Funktion unterscheidet und das erste und das zweite Kommando identisch sind. Somit kann das gleiche Kommando zur Ausführung von unterschiedlichen Funktionen des Feldgerätes in Abhängigkeit eines Werts der Hilfsvariablen dienen.

In einer weiteren Ausführungsform des Verfahrens wird nachdem die zweite Funktion zumindest einmal ausgeführt wurde, die Hilfsvariable wieder auf den ersten Wert gesetzt. Somit kann die erste Funktion des Feldgerätes als Defaultfunktion dienen, die in dem Fall das kein anderer Wert der Hilfsvariablen festgelegt wird ausgeführt wird.

Hinsichtlich des Feldgerätes wird die Aufgabe durch ein Feldgerät zur Verwendung in dem Verfahren nach einer der vorherigen Ausführungsformen gelöst.

Ferner wird die Aufgabe hinsichtlich des Bediengerätes durch ein Bediengerät zur Verwendung in dem Verfahren nach einer der vorherigen Ausführungsformen gelöst.

Hinsichtlich des Computerprogrammprodukts wird die Aufgabe durch ein Computerprogrammprodukt mit Programmcodemitteln gelöst, die wenn die ausgeführt werden zur Durchführung des Verfahrens nach einer der vorherigen Ausführungsformen dienen. Das Verfahren kann bspw. in der Software des Bediengerätes oder der Software des Feldgerätes implementiert sein. Die Software kann bspw. mittels eines Programmcodemittels wie einer Programmiersprache bspw. C, C++, Java etc. umgesetzt sein.

Die Erfindung wird anhand der nachfolgenden Zeichnungen näher erläutert. Es zeigt:

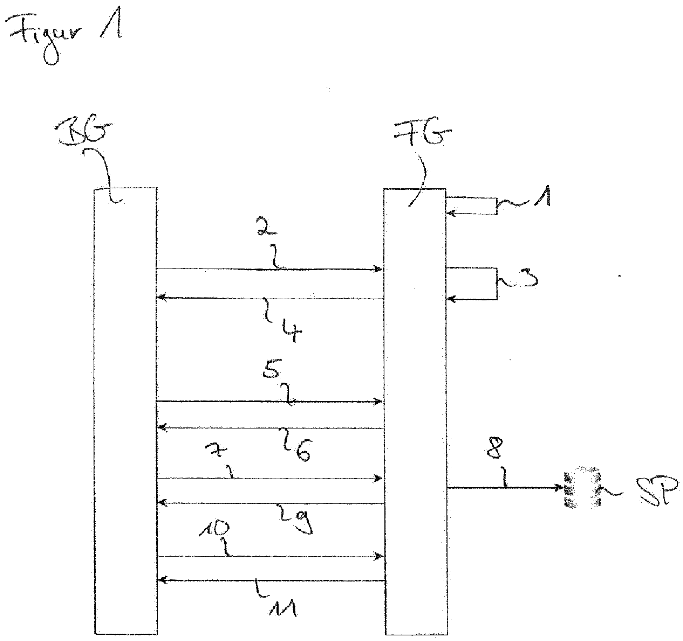

Fig. 1: Eine schematische Darstellung einer Ausführungsform des vorgeschlagenen Verfahrens.

Figur 1 zeigt den zeitlichen Ablauf eines Datenaustausches zwischen einem Bediengerät BG, auf dem bspw. eine Bedienanwendung läuft, und einem Feldgerät FG. In einem ersten Verfahrensschritt 1 wird der Grundzustand der Hilfsvariablen, d. h. ein Wert der Hilfsvariablen gesetzt, gemäß dem eine Funktion des Feldgerätes FG, in diesem Fall das Abspeichern eines erhaltenen Parameterwerts, deaktiviert wird. In einem zweiten Verfahrensschritt 2 wird ein Parameterwert und dessen Adresse von dem Bediengerät BG an das Feldgerät FG übertragen, wobei jedoch aufgrund des Werts der Hilfsvariablen in einem dritten Verfahrensschritt 3 dieser Wert verworfen, d. h. nicht im Feldgerät FG gespeichert wird. Dennoch wird in einem vierten Verfahrensschritt 4 von dem Feldgerät FG eine positive Antwort, die dem erfolgreichen Empfang des Parameterwerts abgibt, von dem Feldgerät an das Bediengerät BG rückübertragen. In einem fünften Verfahrensschritt 5 wird das Schreiben und Abspeichern eines von dem Bediengerät BG an das Feldgerät FG übertragenen Parameterwerts aktiviert. Und in einem sechsten Verfahrensschritt 6 wird eine Antwort, die den Empfang dieses Befehls bestätigt von dem Feldgerät FG zurück an das Bediengerät BG übermittelt. Wird nun in einem siebten Verfahrensschritt 7 ein Parameterwert und eine Adresse von dem Bediengerät BG an das Feldgerät FG übermittelt, somit wird in einem achten Verfahrensschritt 8 der Parameterwert in einer Speichereinheit SP des Feldgerätes FG gespeichert. Auch in diesem Fall wird in einem neunten Verfahrensschritt 9 eine positive Rückmeldung von dem Feldgerät FG an das Bediengerät BG gesendet. In einem zehnten Verfahrensschritt 10 kann dann das Schreibkommando wieder deaktiviert werden, sodass bei einem Empfang eines Parameterwerts der Wert des Parameters nicht in dem Feldgerät FG gespeichert, sondern dieser Wert verworfen wird. Daraufhin kann wiederum in einem elften Verfahrensschritt 11 eine positive Antwort über den Erhalt des Befehls, durch den das Schreibkommando deaktiviert wird, von dem Feldgerät FG an das Bediengerät BG gesendet werden. Bei dem Befehl, durch den das Schreibkommando aktiviert beziehungsweise deaktiviert wird, kann es sich um eine Hilfsvariable handeln in deren Abhängigkeit ein Kommando, wie beispielsweise der Erhalt eines Parameterwerts und einer Adresse durch das Feldgerät FG verarbeitet wird. Anstelle des Schreibkommandos kann es sich auch um ein anderes Kommando, wie beispielsweise ein Lesekommando, handeln. Die Konfiguration dieses Schreib- oder Lesekommandos wird dabei von dem Feldgerät FG vor dem Ausführen dem Schreib- oder Lesebefehls über zusätzliche Parameter mitgeteilt. Durch das Setzen der Hilfsvariablen kann dann ein Download beispielsweise sämtlicher Parameter oder einzelner Parameter oder einer Gruppe von Parametern erfolgen. So kann beispielsweise das Schreibkommando inaktiv geschaltet werden, wie im Ausführungsbeispiel gemäß Figur 1, und in diesem Zustand kein neuer Parameterwert von dem Feldgerät FG geschrieben werden. Um jedoch Fehlermeldungen des Hostsystems wie beispielsweise des Bediengerätes BG zu vermeiden, antwortet das Feldgerät FG auf ein derartiges Schreibkommando mit einer positiven Antwort. Der fünfte Verfahrensschritt 5 durch den das Schreibkommando wiederum deaktiviert wird kann beispielsweise durch eine Nutzerinteraktion wie beispielsweise ein Knopfdruck oder beim Beenden eines Dialogs aktiviert werden. Die Parameterwerte können nun in einer, beispielsweise vorgegebenen Reihenfolge an das Feldgerät FG übertragen werden.

Alternativ kann die Hilfsvariable derartig gesetzt werden, dass dadurch die Persistierung der von dem Feldgerät FG empfangenen Parameterwerte abgeschaltet wird. Um ein Feldgerät FG beispielsweise probeweise zu konfigurieren, kann die Persistierung der Parameter abgeschaltet werden. Das heißt, dass eine Änderung der Parameter und der Parameterwerte nur in einem flüchtigen Speicher erfolgt. Nach einem Neustart des Feldgerätes FG ist dann wieder der ursprüngliche Parametersatz, der in einem nichtflüchtigen Speicher SP gespeichert wird vorhanden.

Ferner kann durch das Ersetzen der Hilfsvariablen der Persistierungsort, an dem Parameter beziehungsweise Parameterwerte gespeichert werden, bestimmt werden. So kann beispielsweise in einem Feldgerät ein EEPROM und ein USB-Port eingebaut sein. Durch Setzen der Hilfsvariablen kann dann angegeben werden, ob der Parameter im EEPROM oder auf dem USB Speichermedium gespeichert werden soll.

Ferner können durch Setzen der Hilfsvariablen das Auflösen der Abhängigkeiten zwischen den Parametern abgeschaltet werden. Für den Fall das mehrere Parameter an das Feldgerät FG geschickt werden, ohne dass deren Abhängigkeiten aufgelöst werden, wie beispielsweise bei einem Download von einem ganzen Parametersatz, können, wie Eingangs geschildert, die Abhängigkeiten der Parameter bereits durch das Hostsystem wie beispielsweise durch das Bediengerät BG oder eine Bedienanwendung aufgelöst werden.

Bei der Hilfsvariablen kann es sich beispielsweise um ein Flag, welches in dem Programmcode des Feldgerätes gespeichert wird, handeln. Dieses Flag kann beispielsweise beim Empfang eines Schreibkommandos dazu dienen, eine entsprechende Funktion des Feldgerätes (FG) aufzulösen, beziehungsweise zu initiieren oder durchzuführen.

### Bezugszeichenliste

- FG: Feldgerät
- BG: Bediengerät
- SP: Speichereinheit
- 1: Erster Verfahrensschritt
- 2: Zweiter Verfahrensschritt
- 3: Dritter Verfahrensschritt
- 4: vierter Verfahrensschritt
- 5: Fünfter Verfahrensschritt
- 6: Sechster Verfahrensschritt
- 7: Siebter Verfahrensschritt
- 8: Achter Verfahrensschritt
- 9: Neunter Verfahrensschritt
- 10: Zehnter Verfahrensschritt
- 11: Elfter Verfahrensschritt

## Patentansprüche

1. Verfahren zum Betreiben eines Feldbusprotokoll-fähigen Feldgerätes (FG), wobei das Feldbusprotokoll über wenigstens ein Kommando verfügt,
welches Kommando in Abhängigkeit eines Werts einer Hilfsvariablen zur Ausführung einer ersten Funktion bzw. zur Ausführung einer zweiten Funktion des Feldgerätes (FG) dient,
wobei sich die erste und die zweite Funktion voneinander unterscheiden,
wobei es sich bei dem Kommando um ein vorspezifiziertes Kommando oder ein herstellerspezifisches Kommando des Feldbusprotokolls des Feldbusprotokollfähigen Feldgerätes (FG) handelt,
wobei es sich bei dem Kommando um ein Schreibkommando zum Schreiben eines Parameterwerts des Feldgeräts in eine Speichereinheit des Feldgeräts handelt, wobei es sich bei der ersten Funktion um die dem Kommando von dem Feldbusprotokoll vorgegebene Funktion handelt,
wobei die zweite Funktion darin besteht, die erste Funktion zu unterlassen, und wobei von dem Feldgerät (FG) als Antwort auf das wenigstens eine Kommando unabhängig von der Funktion, die in Abhängigkeit der Hilfsvariablen feldgeräteintern ausgeführt wird, das gleiche Antworttelegramm und/oder die gleiche Rückmeldung über den Feldbus übertragen wird.

2. Verfahren nach Anspruch 1,
wobei die Hilfsvariable, welche insbesondere durch eine Bedienperson bestimmt wird, wenigstens zwei Werte annehmen kann.

3. Verfahren nach einem der vorherigen Ansprüche,
wobei es sich bei dem Kommando um ein Schreibkommando zum Schreiben eines Parameterwerts eines Parameters des Feldgerätes (FG) in eine Speichereinheit (SP) des Feldgerätes (FG), handelt.

4. Verfahren nach einem der vorherigen Ansprüche,
wobei in Abhängigkeit des Werts der Hilfsvariablen die Speicherung von Daten vermittels des Feldgerätes, vorzugsweise in einer Speichereinheit (SP) des Feldgerätes, in einem flüchtigen bzw. nicht-flüchtigen Speicher erfolgt.

5. Verfahren nach einem der vorherigen Ansprüche,
wobei mehrere Speichereinheiten zur Speicherung von Daten vermittels des Feldgerätes (FG) zur Verfügung stehen,
wobei in Abhängigkeit des Werts der Hilfsvariablen der Speicherort zur Speicherung der Daten ausgewählt wird.

6. Verfahren nach einem der vorherigen Ansprüche,
wobei das Kommando von einem Bediengerät (BG) oder einer Bedien-Anwendung an das Feldgerät (FG) übertragen wird.

7. Verfahren nach einem der vorherigen Ansprüche,
wobei die Hilfsvariable bzw. ein Wert der Hilfsvariablen in einem Telegramm gemeinsam mit dem Kommando an das Feldgerät (FG) übertragen wird.

8. Verfahren nach einem der vorherigen Ansprüche,
wobei der Hilfsvariablen ein erster Wert zugewiesen wird, und ein erstes Kommando an das Feldgerät (FG) übertragen wird, und eine erste diesem Kommando entsprechende Funktion von dem Feldgerät (FG) ausgeführt wird,
wobei der Hilfsvariablen anschließend ein zweiter Wert zugewiesen wird, der sich von dem ersten Wert unterscheidet, und anschließend ein zweites Kommando an das Feldgerät (FG) übertragen und eine zweite Funktion von dem Feldgerät (FG) ausgeführt wird, wobei sich die zweite Funktion von der ersten Funktion unterscheidet, und wobei das erste und das zweite Kommando identisch sind.

9. Verfahren nach dem vorherigen Anspruch,
wobei nachdem die zweite Funktion zumindest einmal ausgeführt wurde, die Hilfsvariable wieder auf den ersten Wert gesetzt wird.

10. Feldgerät (FG) zur Verwendung in dem Verfahren nach einem der vorherigen Ansprüche.

11. Bediengerät (BG) zum Betreiben eines Feldbusprotokoll-fähigen Feldgerätes nach dem Anspruch 10 gemäß dem Verfahren nach einem der Ansprüche 1 bis 9.

12. Computerprogrammprodukt mit Programmcodemitteln, die, wenn sie ausgeführt werden, zur Ausführung des Verfahrens nach einem der Ansprüche 1 bis 9 dienen.

## Claims

1. Method for the operation of a field device (FG) which is compatible with a fieldbus protocol, wherein the fieldbus protocol has at least one command, said command serving to execute a first function or to execute a second function of the field device (FG) depending on a value of an auxiliary variable,
wherein the first function differs from the second function,
wherein the command is a prespecified command or manufacturer-specific command of the fieldbus protocol of the field device (FG) which is compatible with a fieldbus protocol,
wherein the command is a write command designed to write a parameter value of the field device to a memory unit of the field device,
wherein the first function is the function predefined for the command by the fieldbus protocol,
wherein the second function involves inhibiting the execution of the first function, and wherein the same response telegram and/or the same feedback information is transmitted over the fieldbus by the field device (FG) as a response to the at least one command, independently of the function that is executed in the field device depending on the auxiliary variable.

2. Method as claimed in Claim 1,
wherein the auxiliary variable, which is determined in particular by an operator, can adopt at least two values.

3. Method as claimed in one of the previous claims,
wherein the command is a write command designed to write a parameter value of a parameter of the field device (FG) to a memory unit (SP) of the field device (FG).

4. Method as claimed in one of the previous claims,
wherein, depending on the value of the auxiliary variable, data are saved by means of the field device, preferably in a memory unit (SP) of the field device, in a volatile memory or a non-volatile memory.

5. Method as claimed in one of the previous claims,
wherein multiple memory units are provided for the storage of data by means of the field device (FG),
wherein the place to store the data is selected depending on the value of the auxiliary variable.

6. Method as claimed in one of the previous claims,
wherein the command is transmitted to the field device (FG) from an operating unit (BG) or an operating application.

7. Method as claimed in one of the previous claims,
wherein the auxiliary variable or a value of the auxiliary variable is transmitted to the field device (FG) in a telegram together with the command.

8. Method as claimed in one of the previous claims,
wherein a first value is assigned to the auxiliary variable, and a first command is transmitted to the field device (FG), and a first function corresponding to this command is executed by the field device (FG),
wherein a second value is then assigned to the auxiliary variable, said value being different from the first value, and wherein a second command is subsequently transmitted to the field device (FG) and a second function is executed by the field device (FG), wherein the second function differs from the first function, and wherein the first and the second command are identical.

9. Method as claimed in the previous claim,
wherein once the second function has been executed at least once, the auxiliary variable is set back to the first value.

10. Field device (FG) for use in the method as claimed in one of the previous claims.

11. Operating unit (BG) for operating a field device compatible with a fieldbus protocol according to the method as claimed in one of the Claims 1 to 10.

12. Computer program product with program code means, which, when executed, serve to execute the method as claimed in one of the Claims 1 to 11.

## Revendications

1. Procédé destiné à l'exploitation d'un appareil de terrain (FG) compatible avec un protocole de bus de terrain, le protocole de bus de terrain comprenant au moins une commande, laquelle commande sert à l'exécution d'une première fonction ou à l'exécution d'une deuxième fonction de l'appareil de terrain (FG) en fonction d'une valeur d'une variable auxiliaire,
procédé pour lequel la première fonction se distingue de la deuxième fonction, commande concernant laquelle il s'agit d'une commande spécifiée à l'avance ou d'une commande spécifique au fabricant du protocole de bus de terrain de l'appareil de terrain (FG) compatible avec un protocole de bus de terrain, procédé pour lequel il s'agit, concernant la commande, d'une commande d'écriture destinée à écrire une valeur de paramètre de l'appareil de terrain dans une unité de mémoire de l'appareil de terrain,
procédé pour lequel il s'agit, concernant la première fonction, de la fonction prédéfinie pour la commande par le protocole de bus de terrain,
procédé pour lequel la deuxième fonction consiste à inhiber l'exécution de la première fonction, et
procédé pour lequel le même télégramme de réponse et/ou le même retour d'information est transmis via le bus de terrain par l'appareil de terrain (FG) en tant que réponse à l'au moins une commande, indépendamment de la fonction qui est exécutée à l'intérieur de l'appareil de terrain en fonction des variables auxiliaires.

2. Procédé selon la revendication 1,
pour lequel la variable auxiliaire, laquelle est déterminée notamment par un opérateur, peut adopter au moins deux valeurs.

3. Procédé selon l'une des revendications précédentes,
pour lequel il s'agit, concernant la commande, d'une commande d'écriture destinée à écrire une valeur de paramètre de l'appareil de terrain (FG) dans une unité de mémoire (SP) de l'appareil de terrain (FG).

4. Procédé selon l'une des revendications précédentes,
pour lequel est effectué, en fonction de la valeur de la variable auxiliaire, l'enregistrement de données au moyen de l'appareil de terrain, de préférence dans une unité de mémoire (SP) de l'appareil de terrain, dans une mémoire volatile ou non volatile.

5. Procédé selon l'une des revendications précédentes,
pour lequel plusieurs unités de mémoire sont disponibles pour l'enregistrement de données au moyen de l'appareil de terrain (FG),
pour lequel l'emplacement mémoire pour l'enregistrement des données est sélectionné en fonction de la valeur de la variable auxiliaire.

6. Procédé selon l'une des revendications précédentes,
pour lequel la commande est transmise à l'appareil de terrain (FG) par un appareil de commande (BG) ou une application de commande.

7. Procédé selon l'une des revendications précédentes,
pour lequel la variable auxiliaire ou une valeur de la variable auxiliaire est transmise dans un télégramme conjointement avec la commande à l'appareil de terrain (FG).

8. Procédé selon l'une des revendications précédentes,
pour lequel une première valeur est attribuée à la variable auxiliaire, et une première commande est transmise à l'appareil de terrain (FG), et une première fonction correspondant à cette première commande est exécutée par l'appareil de terrain (FG),
pour lequel une deuxième valeur est attribuée à la variable auxiliaire, laquelle se distingue de la première valeur, et ensuite une deuxième commande est transmise à l'appareil de terrain (FG) et une deuxième fonction est exécutée par l'appareil de terrain (FG), la deuxième fonction se distinguant de la première fonction, et la première et la deuxième commande étant identiques.

9. Procédé selon la revendication précédente,
pour lequel, après que la deuxième fonction ait été exécutée au moins une fois, la variable auxiliaire est remise à la première valeur.

10. Appareil de terrain (FG) destiné à une utilisation dans le procédé selon l'une des
revendications précédentes.

11. Appareil de commande (BG) destiné à l'exploitation d'un appareil de terrain compatible avec un protocole de bus de terrain d'après le procédé selon l'une des revendications 1 à 10.

12. Produit de programme d'ordinateur avec des moyens de code de programme qui, lorsqu'ils sont exécutés, servent à l'exécution du procédé selon l'une des revendications 1 à 11.
